# DEMANDE DE BREVET EUROPEEN

(11) **EP 2 278 154 A2**
(43) Date de publication de la demande: **26.01.2011**
(21) Numéro de dépôt: 10162123.3
(22) Date de dépôt: 06.05.2010
(51) Int. Cl.: F02N 11/08, H04B 3/00, H04L 12/40, H04L 25/40

(54) **Système de démarrage d'un moteur**

(30) Priorité: 19.06.2009 FR 0954143
(71) Demandeur: Peugeot Citroën Automobiles SA, 78140 Vélizy-Villacoublay (FR)
(72) Inventeur: Daunas, Olivier, 95000, Cergy (FR)
(74) Mandataire: Ménès, Catherine

(57) **Abrégé**

Dans un système pour démarrer un moteur, un démarreur comprend une interface de communication pour recevoir une donnée représentant une commande de démarrage émise par un contrôleur. Le démarreur comprend en outre un module d'inhibition pour empêcher tout démarrage du moteur lorsqu'un signal d'inhibition (VI) a une magnitude (V) se situant dans une première plage (UR), et pour autoriser tout démarrage lorsque la magnitude (V) se situe dans une deuxième plage (LR). Les caractéristiques suivantes permettent un degré de fiabilité relativement élevé à un coût relativement faible. Le contrôleur est agencé pour donner au signal d'inhibition (VI) un profil temporel prédéfini (PRF). Le démarreur est agencé pour faire démarrer le moteur suite à une apparition du profil temporel prédéfini (PRF) dans le signal d'inhibition (VI).

## Description

Un aspect de l'invention concerne un système de démarrage comprenant un démarreur pour faire démarrer un moteur. Le démarreur peut comprendre, par exemple, une machine électrique tournante réversible, couramment appelée « alterno-démarreur » ou « moteur-générateur électrique ». Le système peut être appliqué, par exemple, dans un véhicule automobile muni d'une fonction d'arrêt et de redémarrage automatique connu sous l'appellation anglaise « Stop and Start ». D'autres aspects de l'invention concernent un démarreur pour un système de démarrage, un contrôleur pour un tel système, un véhicule comprenant un tel système, et un programme d'ordinateur.

Un système de démarrage peut être implémenté au moyen d'un démarreur muni d'une interface de communication. Cette interface de communication permet au démarreur de recevoir des données représentant des commandes émises par un contrôleur. Ces données peuvent être transmises, par exemple, par l'intermédiaire d'un câble de communication spécifique reliant le démarreur au contrôleur. Ainsi le contrôleur peut piloter le démarreur, par exemple, en émettant une donnée représentant une commande de démarrage. L'interface de communication peut également permettre au démarreur de transmettre des données au contrôleur, qui peut les utiliser dans un procédé de pilotage.

Afin d'accroître la sécurité et la fiabilité du système de démarrage, le démarreur comprend de préférence un module d'inhibition sensible à un signal d'inhibition qui provient du contrôleur. Ce signal d'inhibition peut être, par exemple, sous forme d'une tension ayant une valeur ajustable. Dans le cas où la valeur se situe dans une plage basse, le module d'inhibition autorise tout démarrage. En revanche, dans le cas où la valeur se situe dans une plage haute, le module d'inhibition empêche tout démarrage du moteur. L'inverse peut également s'appliquer. Le contrôleur applique le signal d'inhibition au démarreur typiquement par l'intermédiaire d'une liaison filaire sur laquelle la tension est présente. Ainsi le contrôleur peut empêcher un démarrage intempestif et, de façon générale, soumettre tout démarrage à un ensemble de conditions, telles que l'arrêt du moteur et l'ouverture d'une chaîne de traction.

La demande de brevet internationale publiée sous le numéro WO 2006/059008 décrit un procédé pour faire fonctionner un alterno-démarreur dans un véhicule automobile. Une unité de commande distante réalise une gestion de haut niveau qui transmet des informations via une liaison de communication protocolaire à un module de contrôle appartenant à l'alterno-démarreur. L'alterno-démarreur effectue une gestion de bas niveau en fonction de ces informations. Une ou plusieurs commandes de fonctionnement bas niveau sont transmises, de façon redondante, de l'unité de commande vers l'alterno-démarreur via des liaisons filaires additionnelles respectives. Ainsi, l'alterno-démarreur reçoit un signal de démarrage qui permet de démarrer le véhicule automobile même en cas de dysfonctionnement de l'unité de commande. L'alterno-démarreur reçoit un autre signal d'inhibition de démarrage via une autre liaison filaire. Lorsque ce signal est actif, le démarrage du véhicule automobile est inhibé.

Il existe un besoin pour une solution relativement peu onéreuse permettant de démarrer un moteur avec un degré de fiabilité relativement élevé.

Selon un aspect de l'invention, un système de démarrage comprend un démarreur pour faire démarrer un moteur. Le démarreur comprend une interface de communication pour recevoir une donnée représentant une commande de démarrage. Le démarreur comprend en outre un module d'inhibition pour empêcher tout démarrage du moteur lorsqu'un signal d'inhibition a une magnitude se situant dans une première plage, et pour autoriser tout démarrage lorsque la magnitude se situe dans une deuxième plage. Le système de démarrage comprend en outre un contrôleur comprenant une interface de communication pour émettre la donnée représentant la commande de démarrage, et une source pour fournir le signal d'inhibition. Le système est **caractérisé en ce que** le contrôleur est agencé pour donner au signal d'inhibition un profil temporel prédéfini, et en ce que le démarreur est agencé pour faire démarrer le moteur suite à une apparition du profil temporel prédéfini dans le signal d'inhibition.

A cet égard, il a été pris en considération que le signal d'inhibition peut être utilisé pour deux fonctions de sécurité : une fonction d'inhibition du moteur et, de plus, une fonction de démarrage d'urgence. Cette double utilisation du signal d'inhibition est possible car typiquement il n'est pas question d'inhiber le moteur dans le cas où un démarrage d'urgence est nécessaire. Il se peut que le profil donné au signal d'inhibition pour déclencher un démarrage d'urgence se traduise par quelques inhibitions temporaires, de durée relativement courte. Ces inhibitions temporaires sont sans effets réels, car le moteur ne sera évidemment pas inhibé suite à l'apparition du profil.

Ainsi, le contrôleur peut donc déclencher un démarrage du moteur par le biais du signal d'inhibition. Par conséquent, un seul fil électrique reliant le contrôleur et le démarreur suffit pour implémenter les deux fonctions de sécurité : inhibition et démarrage d'urgence. Par contraste, le procédé décrit dans la demande de brevet internationale citée précédemment nécessite deux fils électriques distincts : un fil pour la fonction d'inhibition et un autre fil pour la fonction de démarrage d'urgence. Un système de démarrage selon l'invention, tel que défini précédemment, constitue donc une solution relativement peu onéreuse permettant de démarrer un moteur avec un degré de fiabilité relativement élevé.

Selon un autre aspect de l'invention, un contrôleur pour un système de démarrage tel que défini précédemment est agencé pour donner au signal d'inhibition le profil temporel prédéfini. Selon encore un autre aspect de l'invention, un démarreur pour un système de démarrage tel que défini précédemment est agencé pour faire démarrer le moteur suite à une apparition du profil temporel prédéfini dans le signal d'inhibition. Selon encore un autre aspect de l'invention, un véhicule comprend un système de démarrage tel que défini précédemment. Selon encore un autre aspect de l'invention un programme d'ordinateur comprend des instructions de code de programme qui amène un processeur programmable à fonctionner comme le contrôleur dans un système de démarrage tel que défini précédemment, lorsque ledit programme est exécuté par le processeur programmable. Selon encore un autre aspect de l'invention, un procédé pour contrôler un système de démarrage tel que défini précédemment comprend une étape de démarrage de secours dans laquelle le contrôleur donne le signal d'inhibition un profil temporel prédéfini qui amène le démarreur à faire démarrer le moteur.

Un mode de réalisation de l'invention comprend avantageusement une ou plusieurs des caractéristiques supplémentaires suivantes, lesquelles sont décrites dans les paragraphes suivants.

Avantageusement, le profil temporel prédéfini comprend une impulsion ayant un premier front de la première plage vers la deuxième plage de magnitude, suivie par un second front dans le sens opposé. Une telle impulsion est facilement détectable, ce qui contribue à réduire les coûts.

Avantageusement, le profil temporel prédéfini comprend une séquence d'impulsions. Un tel profil permet d'éviter des erreurs de détection ce qui contribue à la fiabilité.

Avantageusement, le contrôleur vérifie si une communication de données par l'intermédiaire des interfaces de communication respectivement comprises dans le contrôleur et dans le démarreur s'effectue correctement ou non. Le contrôleur donne au signal d'inhibition le profil temporel prédéfini que dans le cas où la communication de données ne s'effectue pas correctement. Ceci contribue à la fiabilité.

Avantageusement, le contrôleur vérifie si le moteur peut exercer une force sur un système de traction ou non. Le contrôleur donne au signal d'inhibition le profil temporel prédéfini que dans le cas où le moteur ne peut exercer une force sur le système de traction. Ceci permet d'éviter un démarrage chaine de traction fermée.

Avantageusement, le contrôleur vérifie si le moteur tourne ou non. Le contrôleur donne au signal d'inhibition le profil temporel prédéfini que dans le cas où le moteur ne tourne pas. Ceci permet d'éviter un démarrage intempestif, moteur tournant.

Avantageusement, une impulsion a une durée comprise entre 10 ms et 1 seconde. Ceci contribue à une détection fiable.

Avantageusement, le contrôleur utilise le principe suivant pour vérifier si une communication de données par l'intermédiaire des interfaces de communication respectivement comprises dans le contrôleur et dans le démarreur s'effectue correctement ou non. Le contrôleur attribue des trames au démarreur dans lesquelles le démarreur peut transmettre des données au contrôleur. Dans le cas où le contrôleur n'a reçu aucune donnée dans un délai prédéfini, le contrôleur considère qu'il y a perte de communication. Cette détection est relativement simple à implémenter, notamment dans le cas où les interfaces de communication fonctionnent selon le protocole LIN, LIN étant un acronyme pour la désignation anglaise « Local Interconnect Network ».

Avantageusement, le démarreur comprend une machine électrique tournante réversible, couramment appelée « alterno-démarreur » ou « moteur-générateur électrique ». Ceci permet une fonction d'arrêt et de redémarrage automatique connue sous l'appellation anglaise « Stop and Start », activée quand certaines conditions d'autorisation d'opération sont remplies, et que d'autres, d'interdiction d'opération, ne le sont pas (par exemple l'arrêt du moteur peut être commandé si le véhicule est à une vitesse proche de 0, et que le marche arrière n'est pas enclenchée).

Une description détaillée en référence à des dessins illustre l'invention brièvement exposée précédemment, ainsi que les caractéristiques supplémentaires identifiées précédemment.
- La figure 1 est un diagramme de blocs illustrant un système de démarrage.
- La figure 2 est un organigramme illustrant une série d'étapes effectuée par un contrôleur dans le système de démarrage.
- La figure 3 est un diagramme de signal illustrant un profil temporel prédéfini que le contrôleur peut donner à un signal d'inhibition dans le système de démarrage.

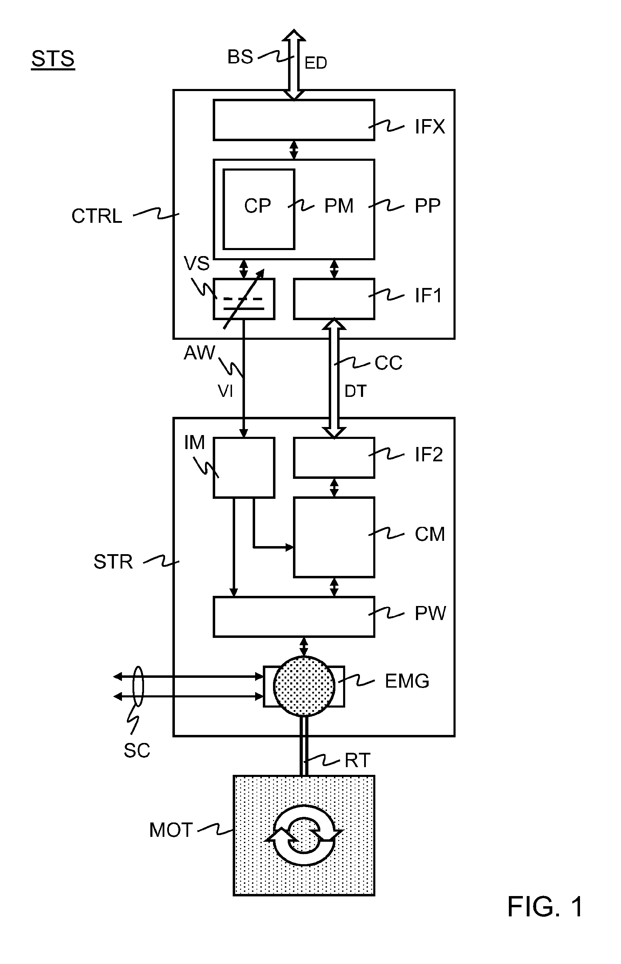

La figure 1 illustre un système de démarrage SYS pour faire démarrer un moteur MOT. Le système de démarrage SYS comprend un contrôleur CTRL et un démarreur STR. Le contrôleur CTRL et le démarreur STR sont électriquement reliés par l'intermédiaire d'un câble de communication CC et d'un fil électrique supplémentaire AW. Le démarreur STR est mécaniquement relié au moteur MOT par l'intermédiaire d'un mécanisme de transmission rotative RT. Le système de démarrage SYS peut faire partie, par exemple, d'un véhicule automobile à roues muni d'une chaîne de traction fonctionnellement disposée entre le moteur MOT et une ou plusieurs roues. Le véhicule automobile peut comprendre d'autres contrôleurs associés à d'autres fonctions, ainsi que des capteurs. Par exemple, le véhicule automobile peut comprendre un contrôleur de moteur, un contrôleur de batterie, un capteur pour détecter si le moteur MOT tourne ou non, et un capteur pour détecter si la chaîne de traction permet au moteur MOT de transmettre du couple aux roues.

Le contrôleur CTRL comprend un processeur programmable PP, une interface de communication inter-système IFX, une interface de communication intra-système IF1, et une source de tension contrôlable VS. Un programme de gestion CP a été stocké dans une mémoire PM du processeur programmable PP. Le programme de gestion CP permet au processeur programmable PP d'effectuer des opérations qui seront décrites dans ce qui suit. L'interface de communication inter-système IFX permet au contrôleur CTRL de communiquer avec d'autres contrôleurs présents dans le véhicule automobile, ainsi que les capteurs. Cette communication peut s'effectuer par l'intermédiaire d'un bus inter-système BS. L'interface de communication intra-système IF1 permet au contrôleur CTRL de communiquer avec le démarreur STR par l'intermédiaire du câble de communication CC. Le contrôleur CTRL peut être implémenté, par exemple, sous forme d'un boîtier comprenant un circuit imprimé muni de composants électroniques.

Le démarreur STR comprend également une interface de communication intra-système IF2, un module de contrôle CM, un circuit de puissance PW, un moteur-générateur électrique EMG, et un module d'inhibition IM. L'interface de communication intra-système IF2 du démarreur STR est compatible avec celui du contrôleur CTRL. C'est-à-dire, ces deux interfaces de communication intra-système IF1, IF2 fonctionnent selon un même protocole. Les deux interfaces de communication intra-système IF1, IF2 sont électriquement reliées par l'intermédiaire du câble de communication CC.

Le module de contrôle CM du démarreur STR peut-être, par exemple, sous forme d'un microcontrôleur convenablement programmé. Le circuit de puissance PW comprend typiquement des transistors de puissance dont certains constituent des commutateurs contrôlables. Le moteur-générateur électrique EMG a deux modes de fonctionnement: un mode moteur et un mode générateur. Le moteur-générateur électrique EMG est typiquement électriquement relié à une batterie dans le véhicule automobile par l'intermédiaire d'une paire de fils d'alimentation SC. Le moteur-générateur électrique EMG peut également être désigné par le terme « alterno-démarreur », comme dans la demande de brevet internationale citée précédemment.

Le module d'inhibition IM du démarreur STR est électriquement relié à la source de tension contrôlable VS du contrôleur CTRL par l'intermédiaire du fil électrique supplémentaire AW. Le module d'inhibition IM peut être implémenté, par exemple, au moyen d'un ensemble d'instructions enregistré dans le microcontrôleur qui implémente également le module de contrôle CM. Dans une autre variante, le module d'inhibition IM peut être implémenté au moyen d'un circuit dédié ayant une topologie particulière, lequel définit des opérations effectuées par le module d'inhibition IM qui seront décrites dans ce qui suit. Le démarreur STR peut être implémenté, par exemple, sous forme d'unité comprenant une partie électromécanique, qui inclut le moteur-générateur électrique EMG, et une partie électronique sous forme d'un circuit imprimé muni de composants électroniques, qui inclut l'interface de communication intra-système IF2, le module de contrôle CM, le circuit de puissance PW, et le module d'inhibition IM.

Le système de démarrage SYS fonctionne globalement comme suit. Le contrôleur CTRL reçoit par l'intermédiaire du bus inter-système BS des données externes ED provenant d'autres contrôleurs et des capteurs qui sont présents dans le véhicule automobile. L'interface de communication intra-système IF1 transmet ces données au processeur programmable PP qui les exploite. Le processeur programmable PP initie des actions en fonction des données externes ED reçues en exécutant le programme de gestion CP. Le processeur programmable PP peut initier une action au moyen d'une commande destinée au démarreur STR.

En particulier, le processeur programmable PP peut mettre en oeuvre une fonction d'arrêt et de redémarrage automatique du moteur MOT, communément appelée « Stop and Start ». Cette fonction vise des économies d'énergie en arrêtant temporairement le moteur MOT de façon automatique dans le cas où le véhicule automobile est immobilisé pendant une période relativement courte. Par exemple, le véhicule automobile peut être temporairement immobilisé devant un feu tricolore ou dans un embouteillage. Le processeur programmable PP doit initier un redémarrage en réponse à une ou plusieurs données externes ED indiquant que le véhicule automobile doit repartir. Par exemple, un capteur associé à une pédale d'accélération peut fournir une donnée externe indiquant un léger appui sur cette pédale, ce qui peut constituer une indication que le véhicule automobile doit repartir. En réponse à une telle donnée externe, le processeur programmable PP initie un redémarrage typiquement en émettant une commande de démarrage destinée au démarreur STR.

Le contrôleur CTRL et le démarreur STR s'échangent des données DT typiquement par l'intermédiaire du câble de communication CC et leurs interfaces de communication intra-système IF1, IF2 respectives. Cet échange de données DT s'effectue selon un protocole particulier, comme par exemple le protocole LIN (LIN est un acronyme pour Local Interconnect Network). Ce protocole a été élaboré par un consortium d'industriels du secteur automobile. Le protocole se caractérise par une transmission série de données. Le protocole LIN prévoit une entité fonctionnant comme « maître » et au moins une autre entité fonctionnant comme « esclave ». En l'espèce, le contrôleur CTRL est maître et le démarreur STR est esclave. Dans ce qui suit, il est supposé que le protocole LIN est appliqué.

Ainsi, le démarreur STR reçoit une commande de redémarrage du contrôleur CTRL typiquement par l'intermédiaire du câble de communication CC. L'interface de communication intra-système IF2 du démarreur STR transmet la commande de redémarrage au module de contrôle CM. En réponse, le module de contrôle CM pilote le circuit de puissance PW de façon à ce que le moteur-générateur électrique EMG fonctionne en mode moteur. Dans ce mode, le moteur-générateur électrique EMG tire de l'énergie électrique de la batterie pour convertir cette énergie électrique en énergie mécanique sous forme d'un mouvement rotatif. Le mécanisme de transmission rotative RT transmet cette énergie mécanique au moteur MOT afin de le faire redémarrer. Le moteur-générateur électrique EMG peut ensuite fonctionner en mode générateur une fois le moteur MOT tournant.

Le processeur programmable PP peut en quelque sorte décider qu'il convient d'inhiber tout démarrage du moteur MOT. Par exemple, le processeur programmable PP peut recevoir une donnée externe ED indiquant que la chaîne de traction est fermée, ce qui signifie que le moteur MOT peut transmettre du couple aux roues. Dans ce cas, une tentative de redémarrage doit généralement être évitée, car celle-ci pourrait provoquer une secousse brutale du véhicule automobile sans que le démarrage du moteur MOT ne s'effectue.

La source de tension contrôlable VS fournie une tension d'inhibition VI ayant une valeur qui est déterminée par le processeur programmable PP. La valeur de la tension d'inhibition VI est relativement élevée dans le cas où le processeur programmable PP décide qu'il convient d'inhiber tout redémarrage du moteur MOT. La valeur est relativement basse dans le cas contraire, c'est-à-dire dans le cas où le processeur programmable PP décide que tout démarrage du moteur MOT est autorisé.

Le module d'inhibition IM du démarreur STR empêche tout démarrage dans le cas où la valeur de la tension d'inhibition VI est relativement élevée. À cette fin, le module d'inhibition IM peut mettre le circuit de puissance PW dans un état empêchant le moteur-générateur électrique EMG de fonctionner en mode moteur. Le module de contrôle CM ne pourrait pas amener le circuit de puissance PW à faire fonctionner le moteur-générateur électrique EMG en mode moteur. Réciproquement, le module d'inhibition IM autorise tout démarrage dans le cas où la tension d'inhibition VI est relativement basse. La tension d'inhibition VI, qui est transmise par l'intermédiaire du fil électrique supplémentaire AW, constitue donc une mesure de sécurité pour empêcher un démarrage intempestif du moteur MOT.

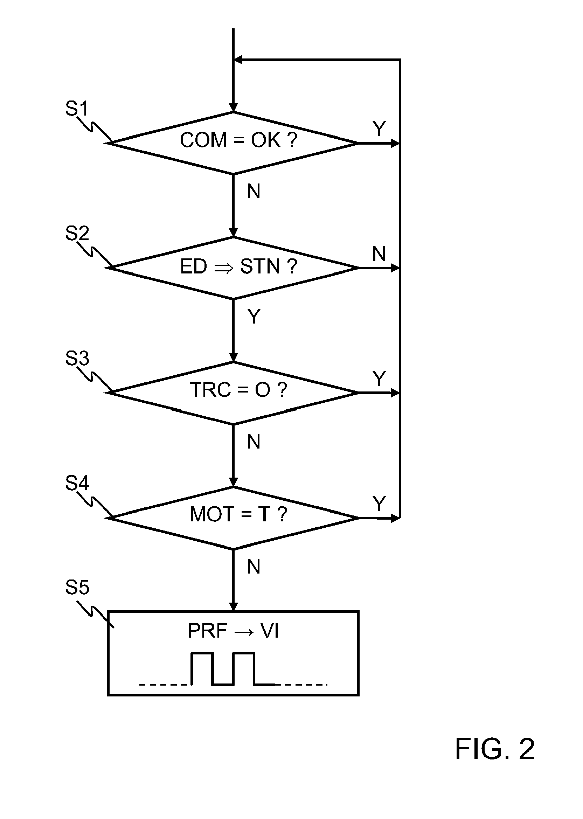

La figure 2 illustre une série d'étapes S1-S5 que le contrôleur CTRL est à même d'effectuer. Cette série d'étapes S1-S5 constitue, en effet, un procédé de démarrage d'urgence. La figure 2 peut être considérée comme étant une représentation, sous forme d'un organigramme, d'un ensemble d'instructions faisant partie du programme de gestion CP stocké dans la mémoire PM du processeur. Ces instructions permettent au processeur programmable PP d'effectuer différentes opérations décrites dans ce qui suit en référence à la figure 2.

Dans une étape S1, le contrôleur CTRL vérifie si une communication de données DT par l'intermédiaire des interfaces de communication intra-système IF1, IF2 respectivement comprises dans le contrôleur CTRL et dans le démarreur STR, s'effectue correctement ou non (COM = OK ?). La communication de données peut être défaillante à cause d'un incident électrique, provoquant par exemple un court-circuit, où un incident mécanique, provoquant par exemple un débranchement du câble de communication CC. La communication de données peut également être défaillante à cause d'un champ électromagnétique relativement puissant. Une telle défaillance est liée à un aspect connu sous l'appellation « compatibilité électromagnétique » (CEM ou, en anglais, EMC).

Le contrôleur CTRL peut avantageusement exploiter quelques caractéristiques du protocole LIN afin de mettre en oeuvre cette détection. Selon le protocole LIN, une communication de données s'effectue par trames selon un schéma prédéfini. Le schéma prédéfini affecte certaines trames au contrôleur CTRL et affecte d'autres trames au démarreur STR. Le contrôleur CTRL et le démarreur STR peuvent communiquer des données dans les trames respectives qui leurs sont affectées. Le contrôleur CTRL, qui est maître, transmet une identification pour chaque trame, afin que le démarreur STR, qui est esclave puisse déterminer si celui-ci peut transmettre des données dans la trame concernée ou non. Dans le cas où le contrôleur CTRL ne reçoit plus de données du démarreur STR dans les trames qui sont affectées à ce dernier, le contrôleur CTRL peut conclure que la communication de données par l'intermédiaire des interfaces de communication intra-système, est défaillante. Le contrôleur CTRL peut appliquer un délai critique dans lequel une donnée du démarreur STR doit être reçue. Ce délai critique peut être, par exemple, compris entre le 2 et 3 secondes.

Dans le cas où la communication de données par l'intermédiaire des interfaces de communication intra-système s'effectue correctement, le contrôleur CTRL peut effectuer une ou plusieurs opérations avant d'effectuer à nouveau l'étape S1. Dans le cas contraire, c'est-à-dire lorsqu'il y a une perte de communication, le contrôleur CTRL effectue une étape S2.

Dans le cas où le contrôleur CTRL constate qu'il n'y a aucune indication d'un démarrage imminent, le contrôleur CTRL peut effectuer une ou plusieurs opérations avant d'effectuer à nouveau l'étape S1. Dans le cas contraire, c'est-à-dire lorsque le véhicule doit repartir, le contrôleur CTRL effectue l'étape S3.

Dans l'étape S3, le contrôleur CTRL vérifie si la chaîne de traction est fermée ou ouverte (TRC = O ?). C'est-à-dire, le contrôleur CTRL vérifie si le moteur MOT peut transmettre du couple aux roues ou non. Le contrôleur CTRL peut effectuer une telle vérification, par exemple, à partir d'une donnée externe ED provenant d'un capteur associé à la chaîne de traction.

Dans le cas où le moteur MOT peut transmettre du couple aux roues, une tentative de redémarrage doit être évitée, car celle-ci pourrait provoquer une secousse brutale du véhicule automobile sans que le démarrage du moteur MOT ne s'effectue. Par conséquent, il convient d'abandonner au moins temporairement le procédé de redémarrage d'urgence que représentent les étapes illustrées à la figure 2. Ainsi, le processeur peut effectuer une ou plusieurs opérations avant d'effectuer à nouveau l'étape S1. Dans le cas contraire, c'est-à-dire lorsque la chaîne de traction est ouverte, le contrôleur CTRL effectue l'étape S4.

Dans l'étape S4, le contrôleur CTRL vérifie si le moteur MOT tourne ou non (MOT = T ?). Le contrôleur CTRL peut effectuer une telle vérification, par exemple, à partir d'une donnée externe ED provenant d'un capteur qui mesure le régime du moteur MOT. Le contrôleur CTRL peut appliquer un seuil, par exemple, de zéro (0) tour par minute. C'est-à-dire, dans le cas où la donnée externe ED indique zéro tour par minute, le contrôleur CTRL considère que le moteur MOT ne tourne pas. Pour toute autre valeur, le contrôleur CTRL considère que le moteur MOT tourne.

Dans le cas où le moteur MOT tourne, une tentative de redémarrage sera inappropriée. Il convient donc d'abandonner au moins temporairement le procédé de redémarrage d'urgence. Ainsi, le processeur peut effectuer une ou plusieurs opérations avant d'effectuer à nouveau l'étape S1. Dans le cas contraire, c'est-à-dire lorsque le moteur MOT est à l'arrêt, le contrôleur CTRL effectue une étape S5.

Dans l'étape S5, le contrôleur CTRL donne à la tension d'inhibition VI un profil temporel prédéfini (PRF → VI), qui sera simplement désigné par « profil PRF » dans ce qui suit pour des raisons de concision. Le profil PRF peut comprendre, par exemple, une ou plusieurs impulsions. Une telle impulsion peut effectivement correspondre à une inhibition de démarrage de durée relativement courte, comme par exemple 100 ms. Dans ce cas, l'impulsion se caractérise par un premier front allant de la valeur relativement basse, signalant une autorisation de redémarrage, vers la valeur relativement élevée, signalant une inhibition de redémarrage comme décrit précédemment. Ce premier front est relativement rapidement suivie par un second front dans le sens opposé, c'est-à-dire allant de la valeur relativement élevée vers la valeur relativement basse.

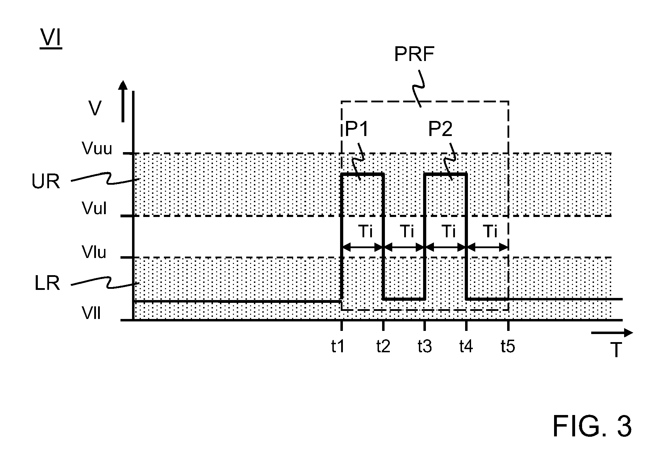

La figure 3 illustre un exemple du profil PRF que le contrôleur CTRL est à même de donner à la tension d'inhibition VI, laquelle est appliquée au démarreur STR par l'intermédiaire du fil électrique supplémentaire AW. La tension d'inhibition VI est illustrée par un graphique comprenant un axe vertical représentant la valeur V de la tension d'inhibition VI, c'est-à-dire la magnitude, et un axe horizontal représentant la dimension temps T.

Deux plages de valeurs sont indiquées : une plage basse LR et une plage haute UR. La plage basse LR est comprise entre une valeur basse inférieure VII et une valeur basse supérieure Vlu. La plage haute UR est comprise entre une valeur élevée inférieure Vul et une valeur élevée supérieure Vuu. Dans le cas où la valeur de la tension d'inhibition VI se trouve dans la plage basse LR, le module d'inhibition IM du démarreur STR illustré à la figure 1 empêche tout redémarrage du moteur MOT. Dans le cas où la valeur de la tension d'inhibition VI se trouve dans la plage haute UR, le module d'inhibition IM du démarreur STR autorise tout démarrage. La valeur relativement basse et la valeur relativement élevée mentionnées précédemment, se situent donc respectivement dans la plage basse LR et la plage haute UR.

Le profil PRF illustré à la figure 3 s'étend d'un instant t1 à un instant t5. Au début du profil PRF, qui correspond à l'instant t1, ainsi qu'à la fin du profil PRF, qui correspond à l'instant t5, la valeur de la tension d'inhibition VI se situe dans la plage basse LR. Le profil PRF est précédé et suivi par des périodes de temps respectives relativement longues où la tension d'inhibition VI se situe dans la plage basse LR, signifiant que le redémarrage du moteur MOT est autorisé. Par exemple, ces périodes de temps peuvent être d'une durée minimum d'une seconde (1 s).

Le profil PRF comprend deux impulsions : une première impulsion P1 suivie par une seconde impulsion P2 similaire. La première impulsion P1 comprend un premier front à l'instant t1 qui s'étend de la plage basse LR vers la plage haute UR, et un second front dans le sens opposé à un instant t2 de la plage haute UR vers la plage basse LR. La seconde impulsion P2 comprend également un tel premier front à un instant t3 et un tel second front à un instant t4. Les différents instants t1-t5 sont régulièrement espacés avec un intervalle de temps Ti. Cet intervalle de temps Ti peut être, par exemple, de l'ordre de quelques dizaines à quelques centaines de millisecondes.

En d'autres termes, le profil PRF illustré à la figure 3 se caractérise par des intervalles de temps Ti successifs d'une même durée. Dans ces intervalles de temps Ti, la tension d'inhibition VI se trouve en alternance dans la plage haute UR ou dans la plage basse LR. Dans le premier intervalle de temps Ti entre les instants t1 et t2, la tension d'inhibition VI se trouve dans la plage haute UR. Dans le dernier intervalle de temps Ti entre les instants t4 et t5, la tension d'inhibition VI se trouve dans la plage basse LR.

Le module d'inhibition IM illustré à la figure 1 est agencé pour détecter le profil PRF illustré à la figure 3. Par exemple, le module d'inhibition IM peut comprendre un ou plusieurs circuits de temporisation et un ou plusieurs circuits de bascule. Ces circuits peuvent opérer sous contrôle d'un signal d'horloge constituant une référence de temps. Dans un autre mode de réalisation, le circuit d'inhibition peut comprendre un détecteur binaire. Le détecteur binaire indique si la tension d'inhibition VI se trouve en dessous ou au-dessus d'un seuil prédéfini en fournissant un bit ayant une valeur égale à 0 ou 1. Ce seuil prédéfini se situe typiquement entre la plage basse LR et la plage haute UR. Un microcontrôleur, qui a été convenablement programmé, peut reconnaître une évolution temporelle de la valeur du bit correspondant au profil PRF illustré à la figure 3.

Le module CM fait redémarrer le moteur MOT suite à la détection du profil PRF avec par exemple, l'application d'un ou plusieurs signaux de contrôle au circuit de puissance PW pour amener ce dernier à mettre le moteur-générateur électrique EMG dans le mode moteur. Ainsi, le moteur-générateur électrique EMG tire de l'énergie électrique de la batterie pour convertir cette énergie électrique en énergie mécanique sous forme d'un mouvement rotatif. Le mécanisme de transmission rotative RT transmet cette énergie mécanique au moteur MOT afin de le faire démarrer.

Le module d'inhibition IM peut appliquer une donnée sous forme d'une commande de démarrage d'urgence. Dans ce cas, le démarrage d'urgence peut s'effectuer à travers le module de contrôle CM, plutôt que par des signaux de contrôle directement appliqués au circuit de puissance PW.

Le démarreur STR peut effectuer quelques vérifications suite à la détection du profil PRF dans le signal d'inhibition afin de déterminer si un démarrage du moteur MOT est approprié ou non. Par exemple, le démarreur STR peut vérifier de son côté s'il y a eu perte de communication. Dans le cas où, le démarreur STR n'a reçu aucun message de supervision du contrôleur CTRL dans un délai prédéfini, le démarreur STR considère qu'il y a effectivement perte de communication et que le redémarrage est approprié. Dans le cas contraire, le redémarrage n'a pas lieu malgré la détection du profil PRF, qui sera probablement erronée. Le démarreur STR peut également vérifier si le moteur-générateur électrique EMG à un régime égal à zéro ou supérieur à zéro grâce a un compte-tours. Le redémarrage a lieu uniquement dans le cas où le régime est égal à zéro. Le module de contrôle CM illustré à la figure 1 peut effectivement ajouter ces conditions de démarrage à celle qui consiste en l'apparition du profil PRF dans le signal inhibition. A noter que ce profil doit être envoyé avant que le démarreur s'endorme suite à une perte de communication.

La description détaillée en référence aux figures est simplement une illustration de l'invention. L'invention peut être réalisée de nombreuses façons différentes. Afin d'illustrer ceci, quelques alternatives sont indiquées sommairement.

L'invention peut être appliquée avantageusement dans de nombreux types de produits munis d'un moteur. Un véhicule automobile n'est qu'un exemple. L'invention peut également être appliquée, par exemple, dans un engin fixe tel qu'une pompe ou un générateur d'électricité de secours. Le moteur peut être de tout type et, en outre, relié à tout type d'entraînement. La seule chose qui importe c'est que le moteur soit muni d'un démarreur.

Il existe de différentes quantités physiques qui peuvent représenter un signal d'inhibition. Une tension n'est qu'un exemple. Le signal d'inhibition peut également être, par exemple, sous forme d'un courant électrique ou d'une charge électrique.

Il existe de nombreux profils pouvant être donnés au signal d'inhibition afin de déclencher un démarrage dans le cas où une commande de démarrage ne peut être communiquée via des interfaces prévues à cet effet. Le profil PRF illustré à la figure 3 n'est qu'un exemple. Un profil peut comprendre une seule impulsion ou une séquence d'impulsions, dans laquelle les impulsions ne sont pas nécessairement similaires. Un profil peut comprendre, par exemple, une impulsion de forme triangulaire, ayant une pente positive et une pente négative, une impulsion de forme cosinusoidal, ou toute autre forme caractérisée par une variation de magnitude en fonction du temps. Afin de détecter de tels profils, il est possible, par exemple, d'appliquer une technique appelée en anglais « matched filtering ». Il convient également de noter qu'un profil ne doit pas nécessairement comprendre une transition de la plage basse LR vers la plage haute UR, ou vice versa, telle qu'illustrée à la figure 3. Par exemple, un démarrage peut être demandé en emmenant la tension d'inhibition VI dans une plage intermédiaire, se situant entre la plage basse LR et la plage haute UR, et en gardant la tension d'inhibition VI dans cette plage intermédiaire pendant une certaine durée minimale.

Il existe de nombreuses façons de communiquer une donnée par l'intermédiaire d'interfaces de communication. Le protocole LIN n'est qu'un exemple. Les interfaces de communication également peuvent fonctionner, par exemple, selon le protocole CAN définit dans la norme ISO 11898 (CAN est un acronyme pour Controller Area Network). La seule chose qui importe c'est la transmission d'une donnée représentant une commande de démarrage.

Le terme « démarreur» doit être interprété de façon large. Ce terme embrasse tout type de dispositif capable de faire démarrer un moteur. Par exemple, il n'est pas nécessaire que le démarreur comprenne une machine électrique tournante réversible, couramment appelée « alterno-démarreur » ou « moteur-générateur électrique ». Le démarreur peut comprendre une machine électrique non-réversible capable de fonctionner comme moteur seulement.

Bien que les dessins montrent différentes entités fonctionnelles sous forme de différents blocs, ceci n'exclut nullement des implémentations où une seule entité effectue plusieurs fonctions, ou plusieurs entités effectuent collectivement une seule fonction. A cet égard, les dessins sont très schématiques. Par exemple, se référant à la figure 1, la source de tension contrôlable VS et le processeur programmable PP peuvent faire partie d'un seul circuit intégré. Ce circuit intégré peut également comprendre l'interface de communication inter-système IFX et l'interface de communication intra-système IF1, ou quelques éléments appartenant à ces interfaces.

Il existe de nombreuses entités fonctionnelles pouvant être implémentées au moyen de matériel (en anglais: hardware) ou de logiciel (en anglais: software) ou une combinaison de matériel et de logiciel. La description d'une implémentation sous forme de logiciel n'exclut nullement des implémentations sous forme de matériel, et vice versa. Par exemple, le processeur programmable PP illustré à la figure 1 peut être remplacé par un circuit dédié ayant une topologie particulière qui définit des opérations à effectuer en fonction des données externes ED reçues ou toute autre donnée. Des implémentations hybrides sont également possibles dans le sens où un système, ou une entité fonctionnelle comprise dans le système, comprend un ou plusieurs circuits dédiés ainsi qu'un ou plusieurs processeurs convenablement programmés.

Les remarques qui précèdent montrent que la description détaillée en référence aux figures illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Système de démarrage (SYS) d'un moteur (MOT) comportant :
• un démarreur (STR) comprenant une interface de communication (IF2) pour recevoir une donnée représentant une commande de démarrage, et un module d'inhibition (IM) pour empêcher tout démarrage du moteur lorsqu'un signal d'inhibition (VI) a une magnitude se situant dans une première plage (UR), et pour autoriser tout démarrage lorsque la magnitude se situe dans une deuxième plage (LR),
• un contrôleur (CTRL) comprenant une interface de communication (IF1) pour émettre la donnée représentant la commande de démarrage, et une source (VS) pour fournir le signal d'inhibition,
le système étant **caractérisé en ce que** le contrôleur est agencé pour donner au signal d'inhibition un profil temporel prédéfini (PRF), et **en ce que** le démarreur est agencé pour faire démarrer le moteur suite à une apparition du profil temporel prédéfini dans le signal d'inhibition.

2. Système de démarrage selon la revendication 1, dans lequel le profil temporel prédéfini (PRF) comprend une impulsion (P1) ayant un premier front de la première plage (LR) vers la deuxième plage (UR) de magnitude, suivie par un second front dans le sens opposé.

3. Système de démarrage selon la revendication 2, dans lequel le profil temporel prédéfini (PRF) comprend une séquence d'impulsions (P1, P2).

4. Système de démarrage selon l'une quelconque des revendications 1 à 3, dans lequel le contrôleur (CTRL) est agencé pour vérifier si une communication de données (DT) par l'intermédiaire des interfaces de communication (IF1, IF2) respectivement comprises dans le contrôleur et dans le démarreur (STR) s'effectue correctement ou non, le contrôleur donnant au signal d'inhibition (VI) le profil temporel prédéfini (PRF) que dans le cas où la communication de données ne s'effectue pas correctement.

5. Système de démarrage selon l'une quelconque des revendications 1 à 4, dans lequel le contrôleur (CTRL) est agencé pour vérifier si le moteur (MOT) peut exercer une force sur un système de traction ou non, le contrôleur donnant au signal d'inhibition (VI) le profil temporel prédéfini (PRF) que dans le cas où le moteur ne peut pas exercer une force sur le système de traction.

6. Système de démarrage selon l'une quelconque des revendications 1 à 5, dans lequel le contrôleur (CTRL) est agencé pour vérifier si le moteur (MOT) tourne ou non, le contrôleur donnant au signal d'inhibition (VI) le profil temporel prédéfini (PRF) que dans le cas où le moteur ne tourne pas.

7. Contrôleur (CTRL) pour un système de démarrage (SYS) selon l'une quelconque des revendications 1 à 6, le contrôleur étant agencé pour donner au signal d'inhibition (VI) le profil temporel prédéfini (PRF).

8. Démarreur (STR) pour un système de démarrage (SYS) selon l'une quelconque des revendications 1 à 6, le démarreur étant agencé pour faire démarrer le moteur (MOT) suite à une apparition du profil temporel prédéfini (PRF) dans le signal d'inhibition (VI).

9. Véhicule comprenant un système de démarrage (SYS) selon l'une quelconque des revendications 1 à 6.

10. Programme d'ordinateur (CP) comprenant des instructions de code de programme qui amène un processeur programmable (PP) à fonctionner comme le contrôleur (CTRL) du système de démarrage (SYS) selon l'une quelconque des revendications 1 à 6, lorsque ledit programme est exécuté par le processeur programmable.
